# EUROPEAN PATENT SPECIFICATION

(11) **EP 3 554 051 B1**
(45) Date of publication and mention of the grant of the patent: **20.01.2021**
(21) Application number: 18753905.1
(22) Date of filing: 07.02.2018
(51) Int. Cl.: H04L 29/08, H04L 9/32, H04L 29/06

(54) **DATA PROCESSING METHOD AND DEVICE**
DATENVERARBEITUNGSVERFAHREN UND -VORRICHTUNG
PROCÉDÉ ET DISPOSITIF DE TRAITEMENT DE DONNÉES

(30) Priority: 17.02.2017 CN 201710085752
(43) Date of publication of application: 16.10.2019
(73) Proprietor: Advanced New Technologies Co., Ltd., George Town, Grand Cayman KY1-9008 (KY)
(72) Inventor: QIU, Honglin, Zhejiang 311121 (CN)
(74) Representative: Branderhorst, Matthijs Pieter Arie
(86) International application number: PCT/CN2018/075571
(87) International publication number: WO 2018/149345

(56) References cited:
- WO-A1-2016/131576
- CN-A- 101 651 719
- CN-A- 102 158 559
- CN-A- 105 719 185
- CN-A- 105 719 185
- CN-A- 105 868 369
- CN-A- 106 126 722
- CN-A- 107 040 582
- US-A1- 2014 108 817
- US-A1- 2016 253 523
- PATEL DHIREN ET AL: "Blockchain exhumed", 2017 ISEA ASIA SECURITY AND PRIVACY (ISEASP), IEEE, 29 January 2017 (2017-01-29), pages 1-12, XP033117503, DOI: 10.1109/ISEASP.2017.7976993 [retrieved on 2017-07-12]

## Description

### Technical Field

The present application relates to the field of computer technologies, and in particular, to a data processing method and device.

### Background

Blockchain is a novel application practice of computer technologies, such as distributed data storage, point-to-point transmission, consensus mechanism, encryption algorithm, etc., which requires that all blockchain nodes remain in the same state (including the state of databases). This way, when a new transaction is produced (i.e., new data is generated) at a blockchain node, the new data needs to be synchronized with all blockchain nodes, and all blockchain nodes need to verify the data.

In the current technologies, a verification method used by blockchain nodes on data is typically determined through a bucket tree-based checksum (e.g., a Hash value). In one example, data in the blockchain nodes of fabric (a blockchain application that has been implemented) is stored in a Merkle tree structure, and the Merkle tree comprises one or more leaf nodes (i.e., the buckets). A single computation device (e.g., a terminal device or server) is typically used for the blockchain nodes to obtain a checksum (e.g., a Hash value) of the above data. For example, the computation device traverses each leaf node, ranks and splices the data of the leaf node into a character string, and computes a checksum of the character string as the checksum of the data of the corresponding leaf node. Then, based on the checksum of the data of each leaf node, the computation device computes a root checksum (e.g., a root Hash value) of the Merkle tree, i.e., a checksum of the data in the blockchain node, and the above data may be verified based on this checksum.

However, since a single computation device is used for computing a root checksum of data in the blockchain nodes, and since each computation is completed by splicing data of leaf nodes into a character string, it will take a long time for the single computation device to execute the above-described computation process when the cumulative data amount in one or more leaf nodes is very high (e.g., 10 million pieces of data), which leads to a low computation efficiency and may even delay the time for block generation and impede normal operations of a block chain.

WO 2016/131576 A1 discloses a method of a client for providing a hash value for a piece of data, where the hash value provides for a time-stamp for the piece of data upon verification.

US 2016/253523 A1 discloses a distributed hash tree-based authentication system for digital input records has more than one upper-level core node, each of which receives at least one uppermost value from aggregators.

CN 105719185 A discloses a block chain data comparison and consensus method used for hash value calculation of content of each transaction.

### Summary

The invention provides data processing methods and data processing devices as set out in the accompanying claims.

From the technical solutions provided by the embodiments of the present invention, it can be seen that, as the data of the leaf nodes is distributed to the server cluster and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

### Brief Description of the Drawings

To more clearly describe the technical solutions in the embodiments of the present application or the current technologies, the accompanying drawings to be used in the description of the embodiments or the current technologies will be briefly described below. It is obvious that the accompanying drawings in the description below are merely some embodiments in the present application. On the basis of these accompanying drawings, other relevant drawings are obtainable by one of ordinary skill in the art without creative effort.
FIG. 1 is a data processing method according to the present application;
FIG. 2 is a schematic diagram of a data processing logic according to the present application;
FIG. 3 is another data processing method according to some embodiments of the present application;
FIG. 4 is yet another data processing method according to some embodiments of the present application;
FIG. 5 is a schematic structural diagram of a data processing system according to the present application;
FIG. 6 is yet another data processing method according to some embodiments of the present application;
FIG. 7 is yet another data processing method according to some embodiments of the present application;
FIG. 8 is a schematic structural diagram of another data processing system according to the present application;
FIG. 9 is a data processing device according to some embodiments of the present application;
FIG. 10 is another data processing device according to some embodiments of the present application.

### Detailed Description

Embodiments of the present application provide a data processing method and device.

To enable one of ordinary skill in the art to better understand the technical solutions of the present application, the technical solutions in the embodiments of the present application will be clearly and completely described below with reference to the accompanying drawings in the embodiments of the present application. It is obvious that the described embodiments are merely some, but not all, embodiments of the present application. On the basis of the embodiments of the present application, all other embodiments obtainable by one of ordinary skill in the art without creative effort shall fall within the scope of the present application.

### Embodiment I

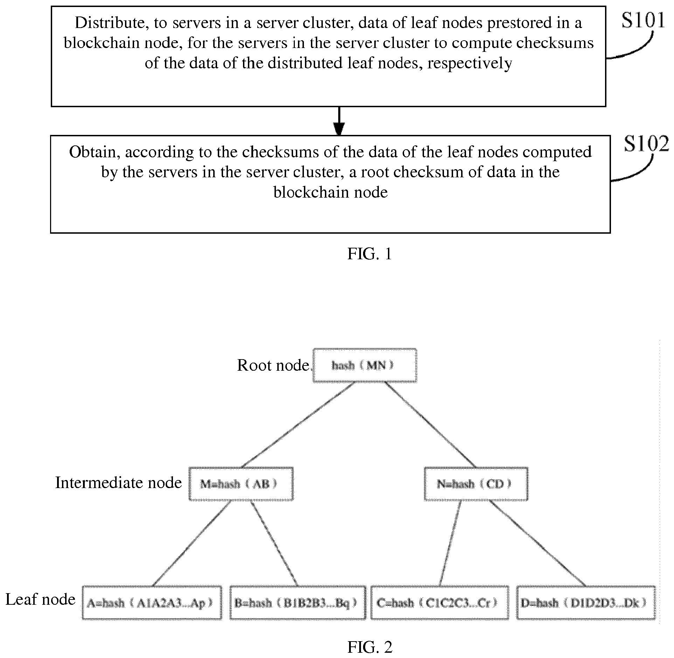

As shown in FIG. 1, the embodiments of the present application provide a data processing method. An entity for executing the method may be a blockchain node. The method may comprise the following steps:
In Step S101, distributing, to servers in a server cluster, data of leaf nodes prestored in a blockchain node, for the servers in the server cluster to compute checksums of the data of the distributed leaf nodes, respectively.

Here, the leaf node may have no sub-node. A blockchain node typically comprises one or more leaf nodes (i.e., buckets), and each leaf node stores an amount of data (which may, for example, be transaction data). A corresponding numerical value may be set for the data amount of each piece of data stored in the leaf node. For example, the data amount of each piece of data is within a range of 100 KB to 5 MB, and 1 MB in an example. The server cluster may be a group formed by a plurality of identical or different servers and may be capable of providing corresponding services for one or more transactions. The checksum may be a character string (e.g., a numerical value or a code) used for checking a file or data. In an exemplary application, the checksum may be a numerical value obtained from computation using a check algorithm based on data summary and the like. The check algorithm based on data summary may comprise the cyclic redundancy check algorithm, message digest algorithm, secure Hash algorithm, etc.

In implementations, a blockchain may be a decentralized distributed database, which is also referred to as a distributed ledger. Based on the blockchain technology, a distributed network formed by a lot of information recording memories (e.g., terminal devices or servers) is needed. The propagation of each new transaction may use the distributed network, and according to a Peer-to-Peer (P2P) network layer protocol, information associated with the transaction is directly sent to all other blockchain nodes across the network by an individual blockchain node, so as to ensure that data stored in all blockchain nodes in the distributed network is consistent. When a blockchain node records a new transaction, the data of the recorded new transaction needs to be synchronized with other blockchain nodes, while other blockchain nodes need to verify the data. An exemplary verification process may be as follows:
a blockchain node comprises one or more leaf nodes, and data in the blockchain node is distributed in the leaf nodes, wherein all data in the leaf nodes comprises reception timestamps, and an order of transactions may be determined according to the timestamps. During verification, a blockchain node may first obtain leaf nodes prestored in the blockchain node. To be able to rapidly determine what leaf nodes are stored in the blockchain node and a number of the leaf nodes, a corresponding node identifier (e.g., a node ID (IDentity)), such as 5 or A8, may be set for each leaf node when the leaf node is generated. When a leaf node is to be obtained, the corresponding leaf node is searched by pre-recorded node identifiers, and the data stored in each leaf node may be obtained.

Since the amount of stored data may be different due to impacts by factors such as different time periods and/or different areas, the amount of data accumulated in one or more leaf nodes may consequently be relatively high, while the amount of data in some other leaf nodes may be relatively small. This way, there may be an imbalance in the amounts of data stored in the leaf nodes of a blockchain node. In order not to impact the generation of blocks and in order to reduce time for computation of a checksum of data in a leaf node, the data in a leaf node may be distributed to a plurality of processors in a server cluster for processing, and the computation burden may be spread throughout the server cluster, thereby improving the computation efficiency.

After the blockchain node obtains data of all leaf nodes, the blockchain node may distribute, in units of leaf node, the data of the leaf nodes to servers in the server cluster. For example, the number of servers in a server cluster may be equal to the number of leaf nodes, and then the blockchain node may send data of one leaf node to each server in the server cluster, causing each server in the server cluster to only comprise data of one leaf node. In addition to the above-described distribution manner, a plurality of distribution manners may also be used. For example, leaf nodes and data of the leaf nodes are sent to servers in a server cluster in a manner of random distribution. This way, different servers may receive the same number or different numbers of leaf nodes. As another example, data of leaf nodes may be distributed according to the amount of data of leaf nodes. In one example, a blockchain node may count the amount of data of each leaf node, and then evenly distribute the data of leaf nodes to servers in a server cluster. For example, there are six leaf nodes with an amount of data of 50 MB, 20 MB, 30 MB, 40 MB, 10 MB, and 10 MB, respectively, and then the data of the leaf node with an amount of data of 50 MB may be sent to the first server in the server cluster, the data of the leaf nodes with amounts of data of 20 MB and 30 MB may be sent to the second server in the server cluster, and the data of the leaf nodes with amounts of data of 40 MB, 10 MB, and 10 MB may be sent to the third server in the server cluster.

After the servers receive the distributed data of leaf nodes, the servers may compute a checksum of the received data of each leaf node. For example, the servers compute a MD5 value of the received data of leaf nodes using a message digest algorithm (e.g., the MD5 algorithm). If one server receives data of two leaf nodes, i.e., the data of leaf node 1 and the data of leaf node 2, respectively, the server may compute a MD5 value of the data of leaf node 1 and compute a MD5 value of the data of leaf node 2, thereby obtaining a checksum of the received data of each leaf node.

In Step S102, further obtaining, according to the checksums of the data of the leaf nodes computed by the servers in the server cluster, a root checksum of data in the blockchain node.

In implementations, after the servers in the server cluster have computed the checksums of the data of the leaf nodes, each server may send the checksums of the data of the leaf nodes computed by the server to the blockchain node. After the blockchain node receives checksums of the data of all the leaf nodes stored in the blockchain node, the blockchain node may compute a root checksum of the data in the blockchain node (i.e., the state) based on the checksums of the data of all the leaf nodes. Here, when the blockchain node computes the root checksum of the data in the blockchain node, a plurality of intermediate nodes may be provided between the leaf nodes and the root node corresponding to the root checksum. As shown in FIG. 2, A, B, C, and D are leaf nodes, and A1, A2, A3, ..., Ap, B1, B2, B3, ..., Bq, C1, C2, C3, ..., Cr, and D1, D2, D3, ..., Dk represent data, respectively. Taking the checksum being a Hash value as an example, the Hash value of leaf node A is hash (A1A2A3...Ap), the Hash value of leaf node B is hash (B1B2B3...Bq), the Hash value of leaf node C is hash (C1C2C3...Cr), and the Hash value of leaf node D is hash (D1D2D3...Dk). M and N are intermediate nodes, and therefore, the Hash value of leaf node M is hash (AB), the Hash value of leaf node N is hash (CD). Then, the root checksum of the root node is hash (MN). By comparing the obtained root checksum of the data in the blockchain node with the above-described root checksum computed by the blockchain node that sends new transaction data, the blockchain node can verify whether the new transaction data is valid. If the new transaction data is valid, the blockchain node may record the data associated with the transaction; if the new transaction data is not valid, the blockchain node may refuse to record the data associated with the transaction.

It should be noted that the above-described root checksum computation process may also be completed by the server cluster. In one example, a management server or a management server cluster may be provided in the server cluster, and the management server or management server cluster may adjust and control other servers in the server cluster. After other servers in the server cluster have computed the checksums of the data of the leaf nodes, the other servers may send the checksums of the data of the leaf nodes to the management server or management server cluster, respectively. The management server or management server cluster may compute a root checksum of the data in the blockchain node using the above-described computation method. The management server or management server cluster may send the obtained root checksum of the data in the blockchain node to the blockchain node, and the blockchain node receives the root checksum. Then, the blockchain node may perform verification through the root checksum. The above related content may be referenced for details, which will not be elaborated here.

This way, the checksums of the data of the leaf nodes in the blockchain node are obtained through parallel computation by a plurality of servers in the server cluster, causing the computation of a root checksum of the data in the blockchain node to be independent from processing by a single machine, thereby improving the data checksum computation efficiency.

The embodiments of the present application provide a data processing method, comprising: distributing, to servers in a server cluster, data of leaf nodes prestored in a blockchain node, for the servers in the server cluster to compute checksums of the data of the distributed leaf nodes, respectively; and further obtaining, according to the checksums of the data of the leaf nodes computed by the servers in the server cluster, a root checksum of the data in the blockchain node. This way, as the data of the leaf nodes is distributed to the server cluster, and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

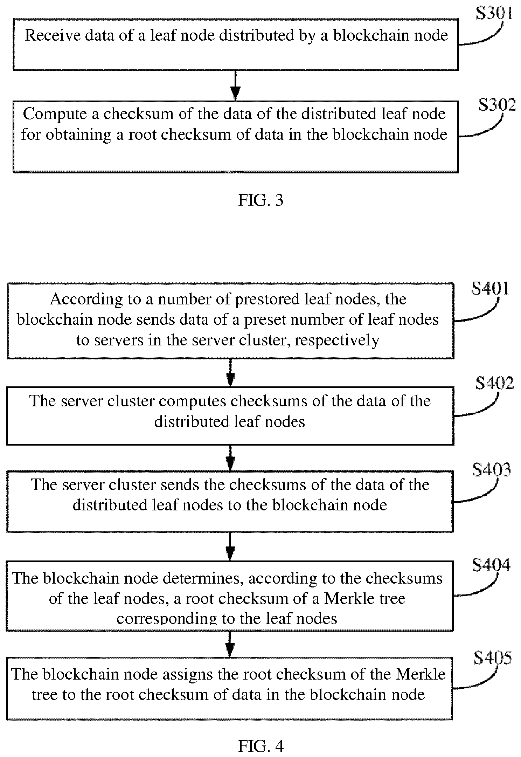

As shown in FIG. 3, the embodiments of the present application provide a data processing method. An entity for executing the method may be a server cluster, the server cluster may comprise a plurality of servers, and each server may compute a data checksum. The method may comprise the following steps:
In Step S301, receiving data of a leaf node distributed by a blockchain node.

In implementations, when data in a blockchain node needs to be verified, the blockchain node may obtain data of leaf nodes stored in the blockchain node, and may distribute, in units of leaf node, the data of the leaf nodes to servers in the server cluster. The related content in the above-described Step S101 may be referenced for detailed distribution manners and distribution processes, which will not be elaborated here. The servers in the server cluster may receive, respectively, the data of the leaf nodes distributed by the blockchain node, and the related content in the above-described Step S101 may be referenced for details, which will not be elaborated here.

In Step S302, computing a checksum of the data of the distributed leaf node for obtaining a root checksum of the data in the blockchain node.

In implementations, the servers in the server cluster may compute a checksum of the data of each of the received leaf node. After the computation is completed, the servers in the server cluster may send the obtained checksums of the data of the leaf nodes, respectively, to the blockchain node. The blockchain node may further compute a root checksum of the data in the blockchain node based on the checksums of the data of the leaf nodes returned by the servers, and the related content in the above-described Step S102 may be referenced for details, which will not be elaborated here.

In some other embodiments of the present application, the root checksum of the data in the blockchain node may also be computed by the server cluster. As described above, a management server or a management server cluster may be provided in the server cluster for aggregately performing computation on the computed checksum of the data of each leaf node to obtain the root checksum of the data in the blockchain node. The related content in the above-described Step S102 may be referenced for details, which will not be elaborated here.

The embodiments of the present application provide a data processing method, comprising: distributing, to servers in a server cluster, data of leaf nodes prestored in a blockchain node, for the servers in the server cluster to compute checksums of the data of the distributed leaf nodes, respectively; and further obtaining, according to the checksums of the data of the leaf nodes computed by the servers in the server cluster, a root checksum of the data in the blockchain node. This way, as the data of the leaf nodes is distributed to the server cluster, and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

### Embodiment II

As shown in FIG. 4, the embodiments of the present application provide a data processing method. The data processing method may be executed jointly by a blockchain node and a server cluster. The embodiments of the present application will be described in detail by taking the checksum being a Hash value as an example. Checksums in other forms may be executed with reference to the related content in the embodiments of the present application, which will not be elaborated here. The method may comprise the following steps:
In Step S401, according to a number of prestored leaf nodes, the blockchain node sends data of a preset number of leaf nodes to servers in the server cluster, respectively.

Here, the preset number may be set according to actual situations, such as 5, 10, etc., which will not be elaborated in the embodiments of the present application.

In implementations, when transaction data is verified, a design mechanism of Merkle tree is often employed for the data in the blockchain node, so as to improve the verification efficiency and reduce resource consumption. In order to improve, to the greatest extent, the computation efficiency for checksums of the data in the blockchain node without changing the existing design mechanism of blockchain data in the embodiments of the present application, the data of the blockchain node in the embodiments of the present application may still use the design mechanism of Merkle tree. A Merkle tree may comprise a plurality of leaf nodes (i.e., the buckets), and node identifiers of all leaf nodes in the Merkle tree may be recorded in the blockchain node. When the transaction data needs to be verified, the node identifiers of all leaf nodes in the Merkle tree may be obtained.

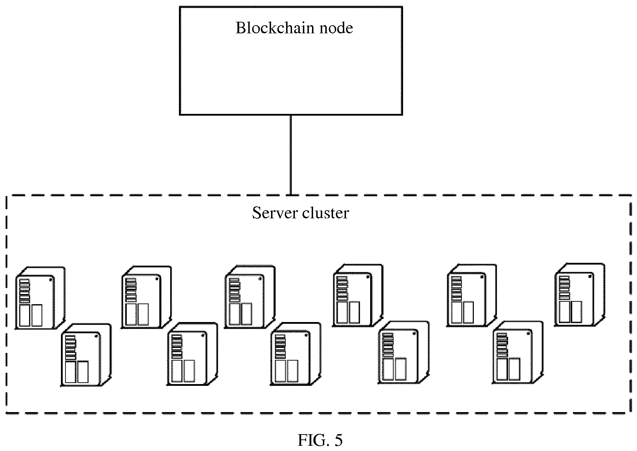

As shown in FIG. 5, the blockchain node may obtain data of all leaf nodes based on node identifiers of all the leaf nodes, respectively, and may also obtain the number of leaf nodes stored in the blockchain node and the number of servers in the server cluster. According to the number of servers and the number of leaf nodes, the blockchain node may determine a number of leaf nodes to be distributed to each server. For example, there is a total of 10 leaf nodes, and the server cluster has a total of 10 servers. Then, the data of one leaf node may be sent to each server, or the data of a group of two or five leaf nodes may be sent to one server in the server cluster, respectively.

In the process that the blockchain node distributes the data of leaf nodes to the server cluster, the blockchain node may also distribute the node identifiers of the leaf nodes to the servers in the server cluster. According to the distributed node identifier, a server may send a data obtaining instruction comprising the node identifier to the blockchain node. When the blockchain node receives the data obtaining instruction, the blockchain node may extract the node identifier in the data obtaining instruction, search for the data of a corresponding leaf node through the node identifier, and send the data to the corresponding server. This way, the server cluster may pull the data of corresponding leaf nodes from the data of a corresponding leaf node, respectively.

It should be noted that, in an exemplary application, the data of the leaf nodes may also be distributed to the servers in the server cluster according to data amounts of the leaf nodes, or the data of the leaf nodes may also be distributed to the servers in the server cluster in a random manner. The related content in the Step S101 in Embodiment I may be referenced for details, which will not be elaborated here.

In Step S402, the server cluster computes checksums of the data of the distributed leaf nodes.

In Step S403, the server cluster sends the checksums of the data of the distributed leaf nodes to the blockchain node.

The related content in Embodiment I may be referenced for detailed processes of the above Step S402 and Step S403, which will not be elaborated here.

In Step S404, the blockchain node determines, according to the above checksums of the leaf nodes, a root checksum of a Merkle tree corresponding to the leaf nodes.

In implementations, after the blockchain node receives the checksums of the leaf nodes sent by the servers in the server cluster, the blockchain node may construct a corresponding Merkle tree through the leaf nodes. Since the Hash values of the leaf nodes on the Merkle tree have been determined and only the Hash value of the root node of the Merkle tree (i.e., the root checksum of the Merkle tree) has not been obtained yet, the Hash value of the Merkle tree corresponding to the leaf nodes may be computed upward from the Hash values of the leaf nodes, thereby obtaining the root checksum of the Merkle tree corresponding to the leaf nodes.

In Step S405, the blockchain node assigns the root checksum of the Merkle tree to the root checksum of data in the blockchain node.

In an exemplary application, the root checksum may also be computed by the server cluster, and the processing may comprise: computing checksums of the data of the distributed leaf nodes; obtaining, based on the checksums of the data of the distributed leaf nodes, a root checksum of data in the blockchain node, and sending the root checksum to the blockchain node. The related content in Embodiment I may be referenced for the detailed process, which will not be elaborated here.

The embodiments of the present application provide a data processing method, comprising: distributing, to servers in a server cluster, data of leaf nodes prestored in a blockchain node, for the servers in the server cluster to compute checksums of the data of the distributed leaf nodes, respectively; and further obtaining, according to the checksums of the data of the leaf nodes computed by the servers in the server cluster, a root checksum of the data in the blockchain node. This way, as the data of the leaf nodes is distributed to the server cluster, and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

### Embodiment III

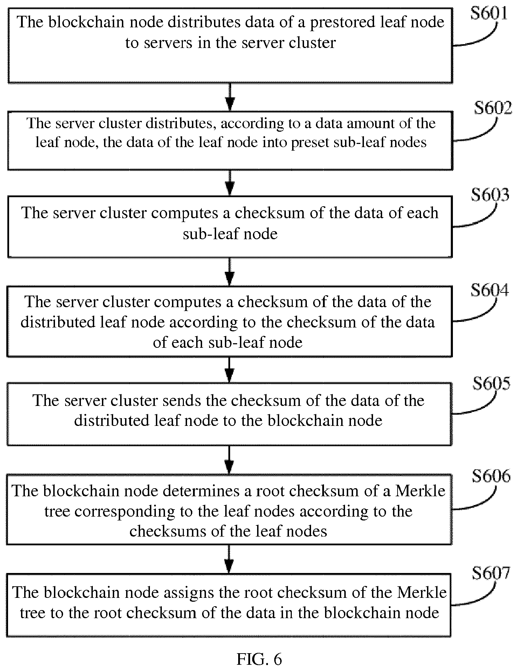

As shown in FIG. 6, the embodiments of the present application provide a data processing method. The data processing method may be executed jointly by a blockchain node and a server cluster. The embodiments of the present application will be described in detail by taking the checksum being a Hash value as an example. Checksums in other forms may be executed with reference to the related content in the embodiments of the present application, which will not be elaborated here. The method may comprise the following steps:
In Step S601, the blockchain node distributes data of a prestored leaf node to servers in the server cluster.

The related contents in Embodiment I and Embodiment II may be referenced for the detailed process of the Step S601, which will not be elaborated here.

In Step S602, the server cluster distributes, according to a data amount of the leaf node, the data of the leaf node into preset sub-leaf nodes.

Here, there is no association relationship between the sub-leaf nodes and the leaf node, such as a belonging relationship, a subordinate relationship, a parent relationship, or a child relationship. A sub-leaf node may be a data packet comprising one or more pieces of data, while a leaf node (bucket) may be a container in the Merkle tree for storing data. The number of sub-leaf nodes may be greater than the number of leaf nodes. For example, if the number of leaf nodes is 5, then the number of sub-leaf nodes may be 20.

In implementations, one or more leaf nodes among the leaf nodes prestored in the blockchain node may have high data amount (e.g., comprising one million pieces of data, etc.). This way, when the data of the leaf node is distributed to a server in the server cluster for computing the Hash value of the leaf node, the server needs to splice the great amount of data in the leaf nodes to obtain a spliced character string, and then computes the Hash value of the spliced character string. This process still takes up a lot of time, and the resource consumption by the server is still high. In view of this, a plurality of sub-leaf nodes may be preset, or a maximum data amount that each sub-leaf node can accommodate may be set for each sub-leaf node according to actual needs, e.g., 1 GB or 500 MB. The data of the leaf node may be distributed to the preset plurality of sub-leaf nodes in a manner of random distribution or even distribution..

There may be a variety of ways to implement the Step S602. An optional processing method will be provided below, which may comprise: sorting the data of the leaf node, sequentially selecting a preset number of pieces of data from the sorted data for placement into the sub-leaf nodes, respectively, and setting corresponding sub-node identifiers for the sub-leaf nodes.

According to data processing rate and checksum computation rate of each server in the server cluster and according to the number of servers in the server cluster, the server cluster may determine an amount of data that each server is capable of processing while ensuring a high overall data processing efficiency (e.g., higher than a set efficiency threshold), and then may determine an amount of data or a number of pieces of data that each sub-leaf node can accommodate. The server cluster may compute the total amount of data of the leaf nodes distributed to each server. Then, the server cluster may sort the data of the distributed leaf nodes according to timestamps indicating the time when the data is stored into the blockchain node, sequentially distribute a preset number of pieces of data from the sorted plurality of pieces of data to each sub-leaf node, and set corresponding sub-node identifiers for the sub-leaf nodes, respectively, according to the order of the data, so as to indicate the position of the data of a sub-leaf node in the data of all sub-leaf nodes.

For example, a sub-leaf node distributed by a server in the server cluster is stored with 50 pieces of data, each piece of data is 5 MB, and then the data amount is 250 MB. If the amount of data that can be accommodated by each sub-leaf node is 25 MB, then 250/25 = 10, and therefore, 10 sub-leaf nodes may be obtained. Then, the sub-leaf nodes are numbered as 1-10 as sub-node identifiers according to the order of the data. After the above-described processing, the storage positions of the 50 pieces of data are as follows: Nos. 1-5 pieces of data in the order are stored in a sub-leaf node numbered as 1, Nos. 6-10 pieces of data in the order are stored in a sub-leaf node numbered as 2, Nos. 11-15 pieces of data in the order are stored in a sub-leaf node numbered as 3, and so on, thereby obtaining the storage position of each piece of data. Since each piece of data is 5 MB, each sub-leaf node may comprise 5 pieces of data.

In Step S603, the server cluster computes a checksum of the data of each sub-leaf node.

In implementations, after the servers in the server cluster obtain corresponding sub-leaf nodes, the servers may obtain data stored in the sub-leaf nodes and then compute a checksum of each sub-leaf node using a preset check algorithm. For example, data stored in a sub-leaf node may be sorted, and then, SHA256 (Secure Hash Algorithm 256) may be used for the sorted data to compute an SHA256 value (i.e., the Hash value) as the checksum of the sub-leaf node.

In Step S604, the server cluster computes a checksum of the data of the distributed leaf node according to the checksum of the data of each sub-leaf node.

In implementations, after the server cluster obtains the checksum of each sub-leaf node, the checksums of the sub-leaf nodes may be sorted according to the order of the sub-node identifiers. Then, the server cluster may aggregately perform computation based on the checksums of the sub-leaf nodes using a preset check algorithm to obtain a checksum of the corresponding leaf node, thereby obtaining a checksum of the data of the leaf node distributed by the blockchain node.

For example, based on the example in the Step S602, respective Hash values of the data of 10 sub-leaf nodes may be obtained through the processing in the Step S603. Since the data of the 10 sub-leaf nodes is distributed from the data of one leaf node, the aggregately-performed computation shown in FIG. 2 may be performed on the obtained Hash values of the data of 10 sub-leaf nodes to obtain a Hash value of the corresponding leaf node.

It should be noted that the data of sub-leaf nodes may also be obtained in a pulling manner through the set sub-node identifiers of the sub-leaf nodes. Correspondingly, the processing in the Step S604 may be as follows: computing a checksum of the data of the distributed leaf node according to the sub-node identifiers of the sub-leaf nodes and the checksum of each sub-leaf node. The above related content may be referenced for the detailed processing, which will not be elaborated here.

In Step S605, the server cluster sends the checksum of the data of the distributed leaf node to the blockchain node.

In Step S606, the blockchain node determines a root checksum of a Merkle tree corresponding to the leaf nodes according to the checksums of the leaf nodes.

In implementations, a root checksum of data in the blockchain node may be computed using a preset check algorithm based on the checksums of the leaf nodes. For example, according to positions of leaf nodes corresponding to the recorded node identifiers in all leaf nodes in the blockchain node, a node distribution tree (i.e., the Merkle tree) formed by the leaf nodes may be obtained, such as A-B-C-F, A-B-E, and A-D. When the checksums of the leaf nodes (i.e., checksums of B+C+D+E+F) are obtained, a root checksum of the Merkle tree may be computed according to the checksums of the leaf nodes, thereby obtaining the root checksum of the data of the blockchain node.

In Step S607, the blockchain node assigns the root checksum of the Merkle tree to the root checksum of the data in the blockchain node.

The related contents in Embodiment I and Embodiment II may be referenced for the detailed processes of the Step S605 and the Step S607, which will not be elaborated here.

The embodiments of the present application provide a data processing method, comprising: distributing node identifiers of leaf nodes to a server cluster, causing the server cluster to distribute each preset number of pieces of data to sub-leaf nodes according to the obtained amounts of data stored in the leaf nodes in a target blockchain, then computing a checksum of each sub-leaf node, determining checksums of the corresponding leaf nodes, and lastly providing the checksums of the leaf nodes to a blockchain node for computing a checksum of the data in the blockchain node. This way, the data stored in the leaf nodes is re-distributed by the server cluster to obtain the sub-leaf nodes, and then checksums of the sub-leaf nodes are computed, causing the data to be evenly distributed to the computation server cluster for parallel computation of the checksums, thereby reducing the time taken by the computation process, improving the computation efficiency, and ensuring normal generation of blocks and normal operations of a blockchain.

### Embodiment IV

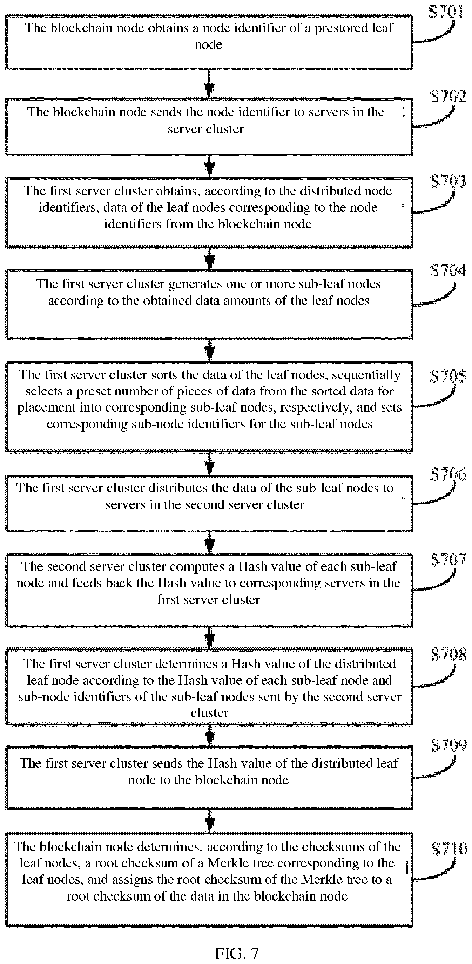

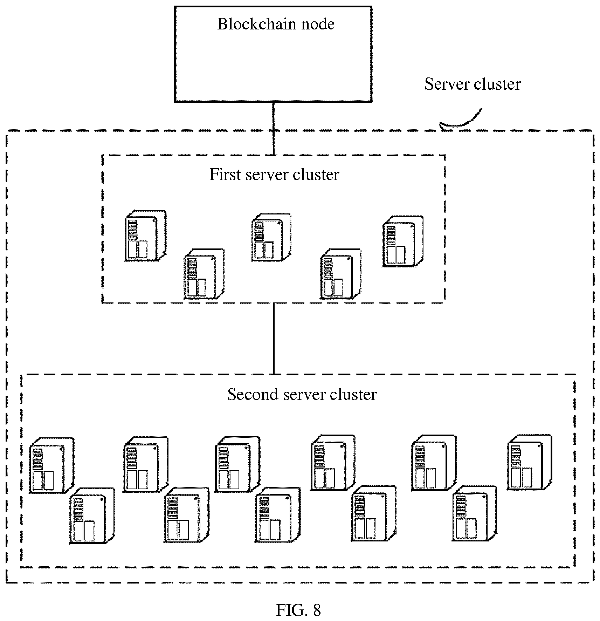

As shown in FIG. 7, the embodiments of the present application provide a data processing method. The data processing method may be executed jointly by a blockchain node and a server cluster. Here, the server cluster may further comprise a first server cluster and a second server cluster, as shown in FIG. 8. FIG. 8 provides a data processing system. The data processing system may comprise server clusters on two levels, i.e., the first server cluster and the second server cluster, wherein the first server cluster is at a level below the blockchain node, and the second server cluster is at a level below the first server cluster. The above hierarchical structure may achieve goals such as data recombination, data distribution, etc. to accelerate the data processing rate. The embodiments of the present application will be described in detail by taking the checksum being a Hash value as an example. Checksums in other forms may be executed with reference to the related content in the embodiments of the present application, which will not be elaborated here. The method may comprise the following steps:
In Step S701, the blockchain node obtains a node identifier of a prestored leaf node.

In implementations, whenever data is stored in the blockchain node, a leaf node is correspondingly generated in the blockchain node, and a node identifier of the leaf node is also generated. This way, the blockchain may comprise a plurality of leaf nodes, and each leaf node stores an amount of data. Whenever a node identifier is generated, the node identifier may be stored, and the position of a leaf node corresponding to the node identifier in all leaf nodes of the blockchain node may be recorded. For example, the generated node identifier is F, and the position of the leaf node corresponding to the node identifier may be A-B-C-F.

In Step S702, the blockchain node sends the node identifier to servers in the server cluster.

In implementations, based on the system structure shown in FIG. 8, the blockchain node may obtain data stored in the leaf nodes comprised in the blockchain node, and may divide node identifiers of the leaf nodes into one group or multiple groups according to a pre-developed distribution rule or in a random manner. Each group of the node identifiers may be sent to one server in the first server cluster.

In Step S703, the first server cluster obtains, according to the distributed node identifiers, data of the leaf nodes corresponding to the node identifiers from the blockchain node.

In implementations, a server in the first server cluster may send a data obtaining instruction comprising the node identifiers to a blockchain device, and then fetch data of the leaf nodes corresponding to the node identifiers from the blockchain node.

In Step S704, the first server cluster generates one or more sub-leaf nodes according to the obtained data amounts of the leaf nodes.

Here, as described above, there is no association relationship between the sub-leaf nodes and the leaf node in the embodiments of the present application, such as a belonging relationship, a subordinate relationship, a parent relationship, or a child relationship. A sub-leaf node may be a data packet comprising one or more pieces of data, while a leaf node (bucket) may be a container in the Merkle tree for storing data.

In implementations, an amount of data or a number of pieces of data that a sub-leaf node can accommodate may be preset, e.g., 100 MB or 10 pieces. The total amount of data of the leaf nodes distributed to each server in the first server cluster may be computed, and one or more sub-leaf nodes may be generated according to the amount of data or the number of pieces of data that each sub-leaf node can accommodate.

In Step S705, the first server cluster sorts the data of the leaf nodes, sequentially selects a preset number of pieces of data from the sorted data for placement into corresponding sub-leaf nodes, respectively, and sets corresponding sub-node identifiers for the sub-leaf nodes.

In implementations, the time lengths taken by any server in the first server cluster to compute Hash values for one and multiple pieces of data may be pre-tested in a repeated testing manner, from which a number of pieces of data corresponding to a relatively short time length and a relatively low processing burden on the server may be selected. This number of pieces may be set as the preset number of pieces, e.g., 30 or 50 pieces. Since each piece of data is provided with a timestamp in the process of storage or blockchain transaction, the time of storage or transaction of each piece of data may be determined through the timestamp. This way, the timestamp in each piece of data may be obtained, and a plurality of pieces of data may be sorted according to the order of the timestamps. A preset number of pieces of data may be sequentially selected from the sorted plurality of pieces of data and distributed into corresponding sub-leaf nodes, respectively. To label the order of the distributed data in different sub-leaf nodes, sub-node identifiers may be set for corresponding sub-leaf nodes based on the distributed data.

For example, the preset number of pieces is three pieces, and data of a leaf node may comprise A, B, C, D, E, F, G, H, and K. After the data is sorted according to the timestamps, the order of the above data may be H-G-F-E-D-C-B-A-K. Then, three pieces of data H-G-F may be distributed into one sub-leaf node, three pieces of data E-D-C may be distributed into one sub-leaf node, and three pieces of data B-A-K may be distributed into one sub-leaf node. To label the order of data stored in the three sub-leaf nodes, the sub-node identifier of the sub-leaf node where H-G-F is located may be set as sub-node 1, the sub-node identifier of the sub-leaf node where E-D-C is located may be set as sub-node 2, and the sub-node identifier of the sub-leaf node where B-A-K is located may be set as sub-node 3.

In Step S706, the first server cluster distributes the data of the sub-leaf nodes to servers in the second server cluster.

In implementations, index data such as the currently remaining bandwidth and/or data transmission rate of each server in the second server cluster may be obtained, respectively. The computation capability of each server in the first server cluster may be evaluated based on the obtained index data, and the data of corresponding sub-leaf nodes may be sent to the servers in the second server cluster according to the magnitude of the computation capabilities.

Furthermore, to improve the computation efficiency as much as possible, the number of the sub-leaf nodes distributed to the servers in the second server cluster may be adjusted. In one example, index data such as current remaining bandwidth and/or data transmission rate of each server in the second server cluster may be obtained, respectively. The computation capability of each server may be evaluated based on the obtained index data, and corresponding sub-leaf nodes may be distributed to the servers in the second server cluster according to the magnitude of the computation capabilities. For example, the second server cluster comprises five servers, and two sub-leaf nodes may be distributed to each server. If it is determined through computation that a server in the second server cluster has the most powerful computation capability, then the data of 3 of the above 10 sub-leaf nodes may be sent to this server. If it is determined through computation that a server in the second server cluster has the weakest computation capability, then the data of 1 of the above 10 sub-leaf nodes may be sent to this server. In the above-described manner, the generated one or more sub-leaf nodes may be provided to the servers in the second server cluster in a balanced manner.

In Step S707, the second server cluster computes a Hash value of each sub-leaf node and feeds back the Hash value to corresponding servers in the first server cluster.

In implementations, after a server in the second server cluster receives corresponding sub-leaf nodes, the server may extract data in each sub-leaf node and sort the data according to the order of timestamps of the data. The server may obtain a character string formed by the sorted data and use a preset Hash algorithm to compute a Hash value of this character string, i.e., the Hash value of the sub-leaf node. With the above-described method, the second server cluster may obtain a Hash value of each sub-leaf node, which may then be sent, via corresponding servers, to corresponding servers in the first server cluster.

In Step S708, the first server cluster determines a Hash value of the distributed leaf node according to the Hash value of each sub-leaf node and sub-node identifiers of the sub-leaf nodes sent by the second server cluster.

In implementations, after the servers in the first server cluster receive the checksums of the sub-leaf nodes returned by the second server cluster, the servers may obtain a sub-node identifier of each sub-leaf node, respectively. Then, the servers may sort the sub-leaf nodes according to the sub-node identifier of each sub-leaf node, and may gather Hash values of the sorted sub-leaf nodes to obtain a Hash value of the sub-leaf nodes. For example, an order of Hash values of the sub-leaf nodes may be determined according to the order of the sub-leaf nodes, and the sorted Hash values may form a character string. A Hash value of the character string may be computed using a preset Hash algorithm, and the Hash value is the Hash value of the corresponding leaf node. In addition, other Hash value computation manners may be used to determine the Hash value of the leaf node. For example, an average of Hash values of one or more sub-leaf nodes may be computed as the Hash value of the leaf node; alternatively, the Hash value of the leaf node may be obtained based on a weight of each sub-leaf node and a Hash value of each sub-leaf node.

In Step S709, the first server cluster sends the Hash value of the distributed leaf node to the blockchain node.

In Step S710, the blockchain node determines, according to the checksums of the leaf nodes, a root checksum of a Merkle tree corresponding to the leaf nodes, and assigns the root checksum of the Merkle tree to a root checksum of the data in the blockchain node.

The embodiments of the present application provide a data processing method, comprising: generating, according to an amount of data of leaf nodes in a blockchain node, one or more sub-leaf nodes distributed with a preset number of pieces of data, then distributing the sub-leaf nodes to a second server cluster for computing a checksum of each sub-leaf node, determining checksums of the corresponding leaf nodes according to the checksum of each sub-leaf node, and lastly providing the checksums of the leaf nodes to the blockchain node for computing a root checksum of the data in the blockchain node. This way, the data stored in the leaf nodes is re-distributed by a first server cluster to obtain the sub-leaf nodes, and then the sub-leaf nodes are distributed to the second server cluster for computing checksums, causing the data to be evenly distributed to the second server cluster for parallel computation of the checksums, thereby reducing the time taken by the computation process, improving the computation efficiency, and ensuring normal generation of blocks and normal operations of a blockchain.

### Embodiment V

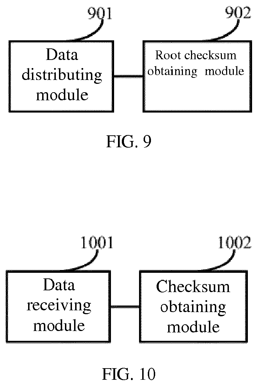

The above-described are the data processing methods provided by the embodiments of the present application. Based on the same concept, the embodiments of the present application further provide a data processing device, as shown in FIG. 9.

The data processing device may be the blockchain node provided in the above embodiments, and in one example, may be a terminal device (e.g., a personal computer, etc.) or a server. The device may comprise a data distributing module 901 and a root checksum obtaining module 902, wherein
the data distributing module 901 is configured to distribute, to servers in a server cluster, data of leaf nodes prestored in a blockchain node, for the servers in the server cluster to compute checksums of the data of the distributed leaf nodes, respectively; and
the root checksum obtaining module 902 is configured to further obtain, according to the checksums of the data of the leaf nodes computed by the servers in the server cluster, a root checksum of the data in the blockchain node.

In the embodiments of the present application, the root checksum obtaining module 902 is configured to receive the root checksum of the data in the blockchain node sent by the servers in the server cluster.

In the embodiments of the present application, the root checksum obtaining module 902 is configured to determine, according to the checksums of the leaf nodes, a root checksum of a Merkle tree corresponding to the leaf nodes; and assign the root checksum of the Merkle tree to the root checksum of the data in the blockchain node.

In the embodiments of the present application, the data distributing module 901 is configured to, according to a number of leaf nodes prestored in the blockchain node, send data of a preset number of leaf nodes to servers in the server cluster, respectively.

In the embodiments of the present application, the checksum is a Hash value.

The embodiments of the present application provide a data processing device configured to distribute, to servers in a server cluster, data of leaf nodes prestored in a blockchain node, for the servers in the server cluster to compute checksums of the data of the distributed leaf nodes, respectively; and further obtain, according to the checksums of the data of the leaf nodes computed by the servers in the server cluster, a root checksum of the data in the blockchain node. This way, as the data of the leaf nodes is distributed to the server cluster, and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

### Embodiment IV

Based on the same concept, the embodiments of the present application further provide a data processing device, as shown in FIG. 10.

The data processing device may be the server cluster provided in the above embodiments, and the device may comprise a data receiving module 1001 and a checksum obtaining module 1002, wherein
the data receiving module 1001 is configured to receive data of a leaf node distributed by a blockchain node; and
the checksum obtaining module 1002 is configured to compute a checksum of the data of the distributed leaf node for obtaining a root checksum of the data in the blockchain node.

In the embodiments of the present application, the device further comprises:
a data distributing module configured to, according to a data amount of the leaf node, distribute the data of the leaf node into preset sub-leaf nodes;
a computing module configured to compute a checksum of the data of each sub-leaf node; and
correspondingly, the checksum obtaining module 1002 is configured to, according to the checksum of the data of each sub-leaf node, compute a checksum of the data of the distributed leaf node.

In the embodiments of the present application, the data distributing module is configured to sort the data of the leaf node, sequentially select a preset number of pieces of data from the sorted data for placement into the sub-leaf nodes, respectively, and set corresponding sub-node identifiers for the sub-leaf nodes; and
correspondingly, the checksum obtaining module 1002 is configured to, according to the sub-node identifiers of the sub-leaf nodes and the checksum of each of the sub-leaf nodes, compute a checksum of the data of the distributed leaf node.

In the embodiments of the present application, the checksum obtaining module 1002 is configured to compute the checksum of the data of the distributed leaf node, and send the checksum of the data of the distributed leaf node to the blockchain node for the blockchain node to compute the root checksum of the data in the blockchain node according to the checksum of the data of the leaf node; or compute the checksum of the data of the distributed leaf node, obtain the root checksum of the data in the blockchain node based on the checksum of the data of the distributed leaf node, and send the root checksum to the blockchain node.

The embodiments of the present application provide a data processing device configured to distribute, to servers in a server cluster, data of leaf nodes prestored in a blockchain node, for the servers in the server cluster to compute checksums of the data of the distributed leaf nodes, respectively; and further obtain, according to the checksums of the data of the leaf nodes computed by the servers in the server cluster, a root checksum of the data in the blockchain node. This way, as the data of the leaf nodes is distributed to the server cluster, and then as checksums of the data of the distributed leaf nodes are computed by each server in the server cluster, the data can be distributed to the server cluster for parallel computation of checksums of the data of the leaf nodes, thereby reducing the time taken by the computation process, improving the computation efficiency, and ensuring normal generation of blocks and normal operations of a blockchain.

In the 1990s, an improvement to a technology can be obviously differentiated into a hardware improvement (e.g., an improvement to a circuit structure, such as a diode, a transistor, a switch, etc.) or a software improvement (an improvement to a flow of a method). With the technological development, however, many current improvements to method flows may be deemed as direct improvements to hardware circuit structures. Designers almost always obtain a corresponding hardware circuit structure by programming an improved method flow into a hardware circuit. Therefore, it cannot be concluded that an improvement to a method flow cannot be realized with a hardware module. For example, Programmable Logic Device (PLD) (e.g., Field Programmable Gate Array (FPGA)) is such integrated circuit that the integrated circuit's logic functions are determined by a user through programming the device. A designer programs on his/her own to "integrate" a digital system onto one piece of PLD, who does not need to ask a chip manufacturer to design and manufacture a dedicated IC chip. At present, moreover, this type of programming has mostly been implemented through "logic compiler" software, rather than manually manufacturing the IC chips. The logic compiler software is similar to a software compiler used for program development and writing, while a particular programming language must be used for writing source codes prior to compiling, which is referred to as a Hardware Description Language (HDL). There is not just one, but many types of HDL, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used right now includes VHDL (Very-High-Speed Integrated Circuit Hardware Description Language) and Verilog. One of ordinary skill in the art should also be aware that it would be very easy to obtain a hardware circuit to implement a logic method flow by using the above HDLs to carry out a little bit logic programming on the method flow and program the method flow into an IC.

A controller may be implemented in any proper manner. For example, a controller may be in, for example, a form of a microprocessor or processor, as well as a computer readable medium that stores computer readable program codes (e.g., software or firmware) capable of being executed by the (micro)processor, a logic gate, a switch, an Application Specific Integrated Circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller may further be implemented as a part of a control logic of a memory. One of ordinary skill in the art should also be aware that, in addition to that a controller is implemented in a manner of pure computer readable program codes, it is totally feasible to perform logic programming on steps of a method to enable a controller to implement the same functions in a form of a logic gate, a switch, an ASIC, a programmable logic controller, an embedded microcontroller, etc. Therefore, such controller may be deemed as a hardware part, while devices comprised in the controller and configured to achieve various functions may also be deemed as a structure inside the hardware part. Alternatively, devices configured to achieve various functions may even be deemed as both software modules to implement a method and a structure inside a hardware part.

The system, apparatus, module, or unit described in the above embodiments may be implemented by a computer chip or entity, or implemented by a product having a function. A typical implementation device is a computer. In one example, a computer may be, for example, a personal computer, a laptop computer, a cellular phone, a camera phone, a smart phone, a personal digital assistant, a medium player, a navigation device, an email device, a game console, a tablet computer, a wearable device, or a combination of any devices in these devices.

For convenience of description, the above device is divided into various units according to functions for description. Functions of the units may be implemented in one or more pieces of software and/or hardware when the present application is implemented.

One of ordinary skill in the art should understand that the embodiments of the present invention may be provided as a method, a system, or a computer program product. Therefore, the present invention may be implemented as a complete hardware embodiment, a complete software embodiment, or an embodiment combing software and hardware. Moreover, the present invention may be in the form of a computer program product implemented on one or more computer usable storage media (including, but not limited to, a magnetic disk memory, CD-ROM, an optical memory, etc.) comprising computer usable program codes.

The present invention is described with reference to flowcharts and/or block diagrams of the method, device (system), and computer program product according to the embodiments of the present invention. It should be understood that a computer program instruction may be used to implement each process and/or block in the flowcharts and/or block diagrams and a combination of processes and/or blocks in the flowcharts and/or block diagrams. These computer program instructions may be provided for a general-purpose computer, a special-purpose computer, an embedded processor, or a processor of other programmable data processing devices to generate a machine, causing the instructions executed by a computer or a processor of other programmable data processing devices to generate an apparatus for implementing a function specified in one or more processes in the flowcharts and/or in one or more blocks in the block diagrams.

These computer program instructions may also be stored in a computer readable memory that can instruct a computer or other programmable data processing devices to work in a particular manner, causing the instructions stored in the computer readable memory to generate a manufactured article that includes an instruction apparatus. The instruction apparatus implements a function specified in one or more processes in the flowcharts and/or in one or more blocks in the block diagrams.

These computer program instructions may also be loaded onto a computer or other programmable data processing devices, causing a series of operational steps to be performed on the computer or other programmable devices, thereby generating computer-implemented processing. Therefore, the instructions executed on the computer or other programmable devices provide steps for implementing a function specified in one or more processes in the flowcharts and/or in one or more blocks in the block diagrams.

In a typical configuration, the computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile, and immobile media, which can implement information storage through any method or technology. The information may be computer readable instructions, data structures, program modules, or other data. Examples of storage media of computers include, but are not limited to, Phase-change Random Access Memories (PRAMs), Static Random Access Memories (SRAMs), Dynamic Random Access Memories (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices, or any other non-transmission media, which can be used for storing information accessible to a computation device. According to the definitions in the specification, the computer readable media do not include transitory media, such as modulated data signals and carriers.

It should be further noted that the terms of "including," "comprising," or any other variants of the terms are intended to encompass a non-exclusive inclusion, causing a process, method, commodity, or device comprising a series of elements to not only comprise these elements, but also comprise other elements that are not clearly listed, or further comprise elements that are inherent to the process, method, commodity, or device. When there is no further restriction, elements defined by the statement "comprising one..." does not exclude that a process, method, commodity, or device comprising the above elements further comprises additional identical elements.

One of ordinary skill in the art should understand that the embodiments of the present application may be provided as a method, a system, or a computer program product. Therefore, the present application may be implemented as a complete hardware embodiment, a complete software embodiment, or an embodiment combing software and hardware. Moreover, the present application may be in the form of a computer program product implemented on one or more computer usable storage media (including, but not limited to, a magnetic disk memory, CD-ROM, an optical memory, etc.) comprising computer usable program codes.

The present application may be described in a regular context of a computer executable instruction that is executed by a computer, such as a program module. Generally, the program module comprises a routine, a program, an object, a component, a data structure, etc. for executing a particular task or implementing a particular abstract data type. The present application may also be practiced in distributed computing environments. In these distributed computing environments, remote processing devices connected via communication networks carry out tasks. In the distributed computing environments, a program module may be located in local and remote computer storage media, including storage devices.

The embodiments in this specification are described in a progressive manner with each embodiment focused on differences from other embodiments, and the embodiments may be mutually referenced for identical or similar parts. In particular, the system embodiment is described in a relatively simple manner, as the system embodiment is substantially similar to the method embodiment. The description of the method embodiment may be referenced for the related parts.

## Claims

1. A data processing method, comprising:
distributing (S601), by a blockchain node, to servers in a server cluster, data of leaf nodes prestored in the blockchain node;
distributing (S602), by each server in the server cluster, the data of the corresponding leaf node evenly into a plurality of sub-leaf nodes according to a data amount of the corresponding leaf node;
computing (S603), by the servers in the server cluster, a checksum for the data of each of the corresponding plurality of sub-leaf nodes in parallel;
computing (S604), by the servers in the server cluster, a checksum of the data of the leaf nodes according to the checksum of the data of each sub-leaf node;
obtaining, by the blockchain node, according to the checksums of the data of the leaf nodes computed by the servers in the server cluster, a root checksum of data in the blockchain node.

2. The method according to claim 1, wherein the obtaining, by the blockchain node, according to the checksums of the data of the leaf nodes computed by the servers in the server cluster, a root checksum of data in the blockchain node comprises:
receiving the root checksum of the data in the blockchain node sent by the servers in the server cluster.

3. The method according to claim 1, wherein the obtaining, by the blockchain node, according to the checksums of the data of the leaf nodes computed by the servers in the server cluster, a root checksum of data in the blockchain node comprises:
determining, according to the checksums of the leaf nodes, a root checksum of a Merkle tree corresponding to the leaf nodes; and
assigning the root checksum of the Merkle tree to the root checksum of the data in the blockchain node.

4. The method according to any one of claims 1-3, wherein the distributing, by a blockchain node, to servers in a server cluster, data of leaf nodes prestored in the blockchain node comprises:
according to a number of the leaf nodes prestored in the blockchain node, respectively sending data of a preset number of leaf nodes to servers in the server cluster.

5. The method according to any one of claims 1-4, wherein the checksums are Hash values.

6. A data processing method, comprising:
receiving, by a server of a server cluster, data of a leaf node distributed by a blockchain node; and
distributing (S602), by the server, data of the leaf node evenly into a plurality of sub-leaf nodes according to a data amount of the leaf node;
computing (S603), by the server, a checksum for the data of each of the plurality of sub-leaf nodes in parallel;
computing, by the server, according to the checksums of the data of the plurality of sub-leaf nodes, a checksum of the data of the distributed leaf node for the blockchain node to obtain a root checksum of data in the blockchain node.

7. The method according to claim 6 wherein, the distributing, by the server, data of the leaf node evenly into a plurality of sub-leaf nodes according to a data amount of the leaf node, comprises:
sorting the data of the leaf node;
sequentially selecting a preset number of pieces of data from the sorted data for placement into the sub-leaf nodes; and
setting corresponding sub-node identifiers for the sub-leaf nodes,
and wherein, the according to the checksums of the data of the plurality of sub-leaf nodes, computing the checksum of the data of the distributed leaf node comprises:
according to the sub-node identifiers of the sub-leaf nodes and the checksum of each of the sub-leaf nodes, computing the checksum of the data of the distributed leaf node.

8. The method according to claim 6, wherein the computing, according to the checksums of the data of the plurality of sub-leaf nodes, a checksum of the data of the distributed leaf node for obtaining a root checksum of data in the blockchain node comprises:
computing the checksum of the data of the distributed leaf node, and sending the checksum of the data of the distributed leaf node to the blockchain node for the blockchain node to compute the root checksum of the data in the blockchain node according to the checksum of the data of the leaf node; or
computing the checksum of the data of the distributed leaf node, obtaining the root checksum of the data in the blockchain node based on the checksum of the data of the distributed leaf node, and sending the root checksum to the blockchain node.

9. A data processing device, comprising:
a data distributing module (901) configured to distribute, to servers in a server cluster, data of leaf nodes prestored in a blockchain node, for each server in the server cluster to distribute the data of the corresponding leaf node evenly into a plurality of sub-leaf nodes according to a data amount of the leaf node, compute a checksum for the data of each of the plurality of sub-leaf nodes in parallel, and compute, according to the checksums of the data of the plurality of sub-leaf nodes, a checksum of the data of the corresponding leaf node, respectively; and
a root checksum obtaining module (902) configured to obtain, according to the checksums of the data of the leaf nodes computed by the servers in the server cluster, a root checksum of data in the blockchain node.

10. The device according to claim 9, wherein the root checksum obtaining module (902) is configured to receive the root checksum of the data in the blockchain node sent by the servers in the server cluster, or, wherein the root checksum obtaining module is configured to determine, according to the checksums of the leaf nodes, a root checksum of a Merkle tree corresponding to the leaf nodes; and assign the root checksum of the Merkle tree to the root checksum of the data in the blockchain node.

11. The device according to claim 9 or 10, wherein the data distributing module (901) is configured to, according to a number of the leaf nodes prestored in the blockchain node, respectively send data of a preset number of leaf nodes to servers in the server cluster.

12. The device according to any one of claims 9-11, wherein the checksums are Hash values.

13. A data processing device, comprising:
a data receiving module configured to receive data of a leaf node distributed by a blockchain node;
a data distributing module (1001) configured to distribute the data of the leaf node evenly into a plurality of sub-leaf nodes according to a data amount of the leaf node;
a computing module configured to compute a checksum of data of each sub-leaf node in parallel;
and
a checksum obtaining module (1002) configured to, according to the checksums of the data of the plurality of sub-leaf nodes, compute a checksum of the data of the distributed leaf node for obtaining a root checksum of data in the blockchain node.

14. The device according to claim 13,
wherein, the data distributing module (1001) is configured to sort the data of the leaf node, sequentially select a preset number of pieces of data from the sorted data for placement into the sub-leaf nodes, and set corresponding sub-node identifiers for the sub-leaf nodes,
and wherein the checksum obtaining module (1002) is configured to, according to the sub-node identifiers of the sub-leaf nodes and the checksum of each of the sub-leaf nodes, compute the checksum of the data of the distributed leaf node.

15. The device according to claim 13, wherein the checksum obtaining module (1002) is configured to compute the checksum of the data of the distributed leaf node, and send the checksum of the data of the distributed leaf node to the blockchain node for the blockchain node to compute the root checksum of the data in the blockchain node according to the checksum of the data of the leaf node; or
compute the checksum of the data of the distributed leaf node, obtain the root checksum of the data in the blockchain node based on the checksum of the data of the distributed leaf node, and send the root checksum to the blockchain node.

## Patentansprüche

1. Datenverarbeitungsverfahren, Folgendes umfassend:
Verteilen (S601), durch einen Blockkettenknoten an Server in einem Server-Cluster, von Daten von Blattknoten, die in dem Blockkettenknoten vorgespeichert sind;
einheitliches Verteilen (S602), durch jeden Server in dem Server-Cluster, der Daten des entsprechenden Blattknotens in eine Vielzahl von Unterblattknoten entsprechend einer Datenmenge des entsprechenden Blattknotens;
paralleles Berechnen (S603), durch die Server in dem Server-Cluster, einer Prüfsumme für die Daten eines jeden der entsprechenden Vielzahl von Unterblattknoten;
Berechnen (S604), durch die Server in dem Server-Cluster, einer Prüfsumme der Daten der Blattknoten entsprechend der Prüfsumme der Daten eines jeden Unterblattknotens;
Erzielen, durch den Blockkettenknoten, entsprechend den Prüfsummen der Daten der Blattknoten, welche durch die Server in dem Server-Cluster berechnet wurden, einer Wurzel-Prüfsumme von Daten in dem Blockkettenknoten.

2. Verfahren nach Anspruch 1, wobei das Erzielen, durch den Blockkettenknoten, entsprechend den Prüfsummen der Daten der Blattknoten, welche durch die Server in dem Server-Cluster berechnet wurden, einer Wurzel-Prüfsumme von Daten in dem Blockkettenknoten Folgendes umfasst:
Empfangen der Wurzel-Prüfsumme der Daten in dem Blockkettenknoten, welche durch die Server in dem Server-Cluster gesendet wurde.

3. Verfahren nach Anspruch 1, wobei das Erzielen, durch den Blockkettenknoten, entsprechend den Prüfsummen der Daten der Blattknoten, welche durch die Server in dem Server-Cluster berechnet wurden, einer Wurzel-Prüfsumme von Daten in dem Blockkettenknoten Folgendes umfasst:
Bestimmen, entsprechend den Prüfsummen der Blattknoten, einer Wurzel-Prüfsumme eines Merkle-Baums, welcher den Blattknoten entspricht; und
Zuordnen der Wurzel-Prüfsumme des Merkle-Baums der Wurzel-Prüfsumme der Daten in dem Blockkettenknoten.

4. Verfahren nach einem der Ansprüche 1 bis 3, wobei das Verteilen, durch einen Blockkettenknoten, an Server in einem Server-Cluster von Daten von Blattknoten, die in dem Blockkettenknoten vorgespeichert sind, Folgendes umfasst:
entsprechend einer Anzahl der in dem Blockkettenknoten vorgespeicherten Blattknoten, jeweils Senden von Daten einer vorgegebenen Anzahl von Blattknoten an Server in dem Server-Cluster.

5. Verfahren nach einem der Ansprüche 1 bis 4, wobei die Prüfsummen Hash-Werte sind.

6. Datenverarbeitungsverfahren, Folgendes umfassend:
Empfangen, durch einen Server eines Server-Clusters, von Daten eines Blattknotens, welcher durch einen Blockkettenknoten verteilt wird; und
einheitliches Verteilen (S602), durch den Server, von Daten des Blattknotens in eine Vielzahl von Unterblattknoten entsprechend einer Datenmenge des Blattknotens;
paralleles Berechnen (S603), durch den Server, einer Prüfsumme für die Daten eines jeden der Vielzahl von Unterblattknoten;
Berechnen, durch den Server, entsprechend den Prüfsummen der Daten der Vielzahl von Unterblattknoten, einer Prüfsumme der Daten des verteilten Blattknotens, damit der Blockkettenknoten eine Wurzel-Prüfsumme von Daten in dem Blockkettenknoten erzielen kann.

7. Verfahren nach Anspruch 6, wobei das einheitliche Verteilen, durch den Server, von Daten des Blattknotens in eine Vielzahl von Unterblattknoten entsprechend einer Datenmenge des Blattknotens Folgendes umfasst:
Sortieren der Daten des Blattknotens;
Sequenzielles Auswählen einer vorgegebenen Anzahl von Datensätzen aus den sortierten Daten um sie in die Unterblattknoten zu platzieren; und
Setzen entsprechender Unterknotenkennungen für die Unterblattknoten,
und wobei das Berechnen, entsprechend den Prüfsummen der Daten der Vielzahl von Unterblattknoten, der Prüfsumme der Daten des verteilten Blattknotens Folgendes umfasst:
entsprechend den Unterknotenkennungen der Unterblattknoten und der Prüfsumme eines jeden der Unterblattknoten, Berechnen der Prüfsumme der Daten des verteilten Blattknotens.

8. Verfahren nach Anspruch 6, wobei das Berechnen, entsprechend der Prüfsummen der Daten der Vielzahl von Unterblattknoten, einer Prüfsumme der Daten des verteilten Blattknotens zum Erzielen einer Wurzel-Prüfsumme von Daten in dem Blockkettenknoten Folgendes umfasst:
Berechnen der Prüfsumme der Daten des verteilten Blattknotens, und Senden der Prüfsumme der Daten des verteilten Blattknotens an den Blockkettenknoten, damit der Blockkettenknoten die Wurzel-Prüfsumme der Daten in dem Blockkettenknoten entsprechend der Prüfsumme der Daten des Blattknotens berechnet; oder
Berechnen der Prüfsumme der Daten des verteilten Blattknotens, Erzielen der Wurzel-Prüfsumme der Daten in dem Blockkettenknoten, basierend auf der Prüfsumme der Daten des verteilten Blattknotens, und Senden der Wurzel-Prüfsumme an den Blockkettenknoten.

9. Datenverarbeitungsvorrichtung, Folgendes umfassend:
ein Datenverteilungsmodul (901), das jeweils konfiguriert ist zum Verteilen, an Server in einem Server-Cluster, von Daten von in einem Blockkettenknoten vorgespeicherten Blattknoten, damit jeder Server in dem Server-Cluster die Daten des entsprechenden Blattknotens einheitlich in eine Vielzahl von Unterblattknoten entsprechend einer Datenmenge des Blattknotens verteilt, zum parallelen Berechnen einer Prüfsumme für die Daten eines jeden der Vielzahl von Unterblattknoten, und zum Berechnen, entsprechend den Prüfsummen der Daten der Vielzahl von Unterblattknoten, einer Prüfsumme der Daten des entsprechenden Blattknotens; und
ein Modul zum Erzielen einer Wurzel-Prüfsumme (902), welches konfiguriert ist zum Erzielen, entsprechend den Prüfsummen der Daten der Blattknoten, welche durch die Server in dem Server-Cluster berechnet wurden, einer Wurzel-Prüfsumme von Daten in dem Blockkettenknoten.

10. Vorrichtung nach Anspruch 9, wobei das Modul zum Erzielen einer Wurzel-Prüfsumme (902) konfiguriert ist zum Empfangen der Wurzel-Prüfsumme der Daten in dem Blockkettenknoten, welche durch die Server in dem Server-Cluster gesendet wurde, oder, wobei das Modul zum Erzielen einer Wurzel-Prüfsumme konfiguriert ist, um entsprechend den Prüfsummen der Blattknoten eine Wurzel-Prüfsumme eines Merkle-Baums zu bestimmen, welche den Blattknoten entspricht; und um die Wurzel-Prüfsumme des Merkle-Baums der Wurzel-Prüfsumme der Daten in dem Blockkettenknoten zuzuordnen.

11. Vorrichtung nach Anspruch 9 oder 10, wobei das Datenverteilungsmodul (901) konfiguriert ist, um entsprechend einer Anzahl der in dem Blockkettenknoten vorgespeicherten Blattknoten, jeweils Daten einer vorgegebenen Anzahl von Blattknoten an Server in dem Server-Cluster zu senden.

12. Vorrichtung nach einem der Ansprüche 9 bis 11, wobei die Prüfsummen Hash-Werte sind.

13. Datenverarbeitungsvorrichtung, Folgendes umfassend:
ein Datenempfangsmodul, welches konfiguriert ist, um Daten eines durch einen Blockkettenknoten verteilten Blattknotens zu empfangen;
ein Datenverteilungsmodul (1001), welches konfiguriert ist zum einheitlichen Verteilen der Daten des Blattknotens in eine Vielzahl von Unterblattknoten entsprechend einer Datenmenge des Blattknotens;
ein Berechnungsmodul, welches konfiguriert ist zum parallelen Berechnen einer Prüfsumme von Daten eines jeden Unterblattknotens; und
ein Modul zum Erzielen einer Prüfsumme (1002), welches konfiguriert ist zum Berechnen, entsprechend den Prüfsummen der Daten der Vielzahl von Unterblattknoten, einer Prüfsumme der Daten des verteilten Blattknotens zum Erzielen einer Wurzel-Prüfsumme von Daten in dem Blockkettenknoten.

14. Vorrichtung nach Anspruch 13, wobei
das Datenverteilungsmodul (1001) konfiguriert ist zum Sortieren der Daten des Blattknotens, sequenziellen Auswählen einer vorgegebenen Anzahl von Datensätzen aus den sortierten Daten, um sie in die Unterblattknoten zu platzieren, und zum Setzen entsprechender Unterknotenkennungen für die Unterblattknoten,
und wobei das Modul zum Erzielen einer Prüfsumme (1002) konfiguriert ist zum Berechnen, entsprechend den Unterknotenkennungen der Unterblattknoten und der Prüfsumme eines jeden der Unterblattknoten, der Prüfsumme der Daten des verteilten Blattknotens.

15. Vorrichtung nach Anspruch 13, wobei das Modul zum Erzielen einer Prüfsumme (1002) konfiguriert ist zum Berechnen der Prüfsumme der Daten des verteilten Blattknotens, und Senden der Prüfsumme der Daten des verteilten Blattknotens an den Blockkettenknoten, damit der Blockkettenknoten die Wurzel-Prüfsumme der Daten in dem Blockkettenknoten entsprechend der Prüfsumme der Daten des Blattknotens berechnet; oder
zum Berechnen der Prüfsumme der Daten des verteilten Blattknotens, Erzielen der Wurzel-Prüfsumme der Daten in dem Blockkettenknoten, basierend auf der Prüfsumme der Daten des verteilten Blattknotens, und Senden der Wurzel-Prüfsumme an den Blockkettenknoten.

## Revendications

1. Procédé de traitement de données, comprenant :
la distribution (S601), par un nœud de blockchain, à des serveurs dans un groupe de serveurs, de données de nœuds de feuille qui sont préstockés dans le nœud de blockchain ;
la distribution (S602) uniforme, par chaque serveur dans le groupe de serveurs, des données du nœud de feuille correspondant dans une pluralité de nœuds de sous-feuille en fonction d'une quantité de données du nœud de feuille correspondant ;
le calcul (S603) en parallèle, par les serveurs dans le groupe de serveurs, d'un total de contrôle pour les données de chacun de la pluralité correspondante de nœuds de sous-feuille;
le calcul (S604), par les serveurs dans le groupe de serveurs, d'un total de contrôle des données des nœuds de feuille en fonction du total de contrôle des données de chaque nœud de sous-feuille ;
l'obtention, par le nœud de blockchain, en fonction des totaux de contrôle des données des nœuds de feuille qui sont calculés par les serveurs dans le groupe de serveurs, d'un total de contrôle de racine de données dans le nœud de blockchain.

2. Procédé selon la revendication 1, dans lequel l'obtention, par le nœud de blockchain, en fonction des totaux de contrôle des données des nœuds de feuille qui sont calculés par les serveurs dans le groupe de serveurs, d'un total de contrôle de racine de données dans le nœud de blockchain comprend :
la réception du total de contrôle de racine des données dans le nœud de blockchain qui est envoyé par les serveurs dans le groupe de serveurs.

3. Procédé selon la revendication 1, dans lequel l'obtention, par le nœud de blockchain, en fonction des totaux de contrôle des données des nœuds de feuille qui sont calculés par les serveurs dans le groupe de serveurs, d'un total de contrôle de racine de données dans le nœud de blockchain comprend :
la détermination, en fonction des totaux de contrôle des nœuds de feuille, d'un total de contrôle de racine d'une arborescence de Merkle correspondant aux nœuds de feuille ; et
l'attribution du total de contrôle de racine de l'arborescence de Merkle au total de contrôle de racine des données dans le nœud de blockchain.

4. Procédé selon l'une quelconque des revendications 1 à 3, dans lequel la distribution, par un nœud de blockchain, à des serveurs dans un groupe de serveurs, de données de nœuds de feuille qui sont préstockés dans le nœud de blockchain comprend :
en fonction d'un nombre des nœuds de feuille qui sont préstockés dans le nœud de blockchain, respectivement l'envoi de données d'un nombre prédéfini de nœuds de feuille à des serveurs dans le groupe de serveurs.

5. Procédé selon l'une quelconque des revendications 1 à 4, dans lequel les totaux de contrôle sont des valeurs de hachage.

6. Procédé de traitement de données, comprenant :
la réception, par un serveur d'un groupe de serveurs, de données d'un nœud de feuille qui est distribué par un nœud de blockchain ; et
la distribution (S602) uniforme, par le serveur, de données du nœud de feuille dans une pluralité de nœuds de sous-feuille en fonction d'une quantité de données du nœud de feuille ;
le calcul (S603) en parallèle, par le serveur, d'un total de contrôle pour les données de chacun de la pluralité de nœuds de sous-feuille ;
le calcul, par le serveur, en fonction des totaux de contrôle des données de la pluralité de nœuds de sous-feuille, d'un total de contrôle des données du nœud de feuille distribué pour que le nœud de blockchain obtienne un total de contrôle de racine de données dans le nœud de blockchain.

7. Procédé selon la revendication 6, dans lequel la distribution uniforme, par le serveur, de données du nœud de feuille dans une pluralité de nœuds de sous-feuille en fonction d'une quantité de données du nœud de feuille comprend :
le tri des données du nœud de feuille ;
la sélection séquentielle d'un nombre prédéfini d'éléments de données à partir des données triées pour leur positionnement dans les nœuds de sous-feuille ; et
la définition d'identifiants de sous-nœud correspondants pour les nœuds de sous-feuille ;
et dans lequel, en fonction des totaux de contrôle des données de la pluralité de nœuds de sous-feuille, le calcul du total de contrôle des données du nœud de feuille distribué comprend :
en fonction des identifiants de sous-nœud des nœuds de sous-feuille et du total de contrôle de chacun des nœuds de sous-feuille, le calcul du total de contrôle des données du nœud de feuille distribué.

8. Procédé selon la revendication 6, dans lequel le calcul, en fonction des totaux de contrôle des données de la pluralité de nœuds de sous-feuille, d'un total de contrôle des données du nœud de feuille distribué pour obtenir un total de contrôle de racine de données dans le nœud de blockchain comprend :
le calcul du total de contrôle des données du nœud de feuille distribué et l'envoi du total de contrôle des données du nœud de feuille distribué au nœud de blockchain afin que le nœud de blockchain calcule le total de contrôle de racine des données dans le nœud de blockchain en fonction du total de contrôle des données du nœud de feuille ; ou
le calcul du total de contrôle des données du nœud de feuille distribué, l'obtention du total de contrôle de racine des données dans le nœud de blockchain sur la base du total de contrôle des données du nœud de feuille distribué et l'envoi du total de contrôle de racine au nœud de blockchain.

9. Dispositif de traitement de données, comprenant :
un module de distribution de données (901) qui est respectivement configuré pour distribuer, à des serveurs dans un groupe de serveurs, des données de nœuds de feuille qui sont préstockés dans un nœud de blockchain, pour que chaque serveur dans le groupe de serveurs distribue les données du nœud de feuille correspondant de façon uniforme dans une pluralité de nœuds de sous-feuille en fonction d'une quantité de données du nœud de feuille, pour calculer en parallèle, un total de contrôle pour les données de chacun de la pluralité de nœuds de sous-feuille et pour calculer, en fonction des totaux de contrôle des données de la pluralité de nœuds de sous-feuille, un total de contrôle des données du nœud de feuille correspondant ; et
un module d'obtention de total de contrôle de racine (902) qui est configuré pour obtenir, en fonction des totaux de contrôle des données des nœuds de feuille qui ont été calculés par les serveurs dans le groupe de serveurs, un total de contrôle de racine de données dans le nœud de blockchain.

10. Dispositif selon la revendication 9, dans lequel le module d'obtention de total de contrôle de racine (902) est configuré pour recevoir le total de contrôle de racine des données dans le nœud de blockchain qui est envoyé par les serveurs dans le groupe de serveurs, ou dans lequel le module d'obtention de total de contrôle de racine est configuré pour déterminer, en fonction des totaux de contrôle des nœuds de feuille, un total de contrôle de racine d'une arborescence de Merkle correspondant aux nœuds de feuille ; et pour attribuer le total de contrôle de racine de l'arborescence de Merkle au total de contrôle de racine des données dans le nœud de blockchain.

11. Dispositif selon la revendication 9 ou 10, dans lequel le module de distribution de données (901) est configuré pour, en fonction d'un nombre des nœuds de feuille qui sont préstockés dans le nœud de blockchain, envoyer respectivement des données d'un nombre prédéfini de nœuds de feuille à des serveurs dans le groupe de serveurs.

12. Dispositif selon l'une quelconque des revendications 9 à 11, dans lequel les totaux de contrôle sont des valeurs de hachage.

13. Dispositif de traitement de données, comprenant :
un module de réception de données qui est configuré pour recevoir des données d'un nœud de feuille qui est distribué par un nœud de blockchain ;
un module de distribution de données (1001) qui est configuré pour distribuer les données du nœud de feuille de façon uniforme dans une pluralité de nœuds de sous-feuille en fonction d'une quantité de données du nœud de feuille ;
un module de calcul qui est configuré pour calculer en parallèle, un total de contrôle de données de chaque nœud de sous-feuille; et
un module d'obtention de total de contrôle (1002) qui est configuré pour, en fonction des totaux de contrôle des données de la pluralité de nœuds de sous-feuille, calculer un total de contrôle des données du nœud de feuille distribué pour obtenir un total de contrôle de racine de données dans le nœud de blockchain.

14. Dispositif selon la revendication 13,
dans lequel le module de distribution de données (1001) est configuré pour trier les données du nœud de feuille, pour sélectionner séquentiellement un nombre prédéfini d'éléments de données à partir des données triées pour leur positionnement dans les nœuds de sous-feuille et pour définir des identifiants de sous-nœud correspondants pour les nœuds de sous-feuille ;
et dans lequel le module d'obtention de total de contrôle (1002) est configuré pour, en fonction des identifiants de sous-nœud des nœuds de sous-feuille et du total de contrôle de chacun des nœuds de sous-feuille, calculer le total de contrôle des données du nœud de feuille distribué.

15. Dispositif selon la revendication 13, dans lequel le module d'obtention de total de contrôle (1002) est configuré pour calculer le total de contrôle des données du nœud de feuille distribué et pour envoyer le total de contrôle des données du nœud de feuille distribué au nœud de blockchain pour que le nœud de blockchain calcule le total de contrôle de racine des données dans le nœud de blockchain en fonction du total de contrôle des données du nœud de feuille ; ou
pour calculer le total de contrôle des données du nœud de feuille distribué, pour obtenir le total de contrôle de racine des données dans le nœud de blockchain sur la base du total de contrôle des données du nœud de feuille distribué et pour envoyer le total de contrôle de racine au nœud de blockchain.
